# EUROPÄISCHE PATENTSCHRIFT

(11) **EP 0 451 464 B1**
(45) Veröffentlichungstag und Bekanntmachung des Hinweises auf die Patenterteilung: **12.06.1996**
(21) Anmeldenummer: 91102241.6
(22) Anmeldetag: 18.02.1991
(51) Int. Cl.: B23K 9/10, B23K 26/00

(54) **Verfahren und Schaltungsanordnung zur Regelung des Schweissstromes bzw. der Schweissleistung in Abhängigkeit von der Schweissgeschindigkeit**
Method and circuit for controlling the welding current, the welding power in response to the welding speed
Méthode et circuit de réglage du courant de soudage, la puissance de soudage en fonction de la vitesse de soudage

(30) Priorität: 11.04.1990 DE 4011647; 04.05.1990 DE 4014275
(43) Veröffentlichungstag der Anmeldung: 16.10.1991
(73) Patentinhaber: kabelmetal electro GmbH, D-30002 Hannover (DE)
(72) Erfinder: Brünn, Rainer, W-3031 Essel (DE); Klebl, Wolfram, W-3004 Isernhagen 2 (DE)

(56) Entgegenhaltungen:
- EP-A- 0 143 450
- FR-A- 2 027 970
- US-A- 3 619 554

## Beschreibung

Die vorliegende Erfindung befaßt sich mit einem Verfahren und einer Schaltungsanordnung zur Regelung des Schweißstromes bei einer Gleichstrom-Lichtbogenschweißeinrichtung bzw. der Schweißleistung einer Laserschweißeinrichtung in Abhängigkeit von der Schweißgeschwindigkeit bei Schweißeinrichtungen zur kontinuierlichen Längsnahtverschweißung zum Rohr geformter Metallbänder.

Bekannt ist ein Verfahren und eine Vorrichtung zum Schweißen (EP-A-143450) von relativ zu einer Schweißvorrichtung mit gepulster hoher Energiedichte vorbeigeführtem Gut. Dabei wird die Schweißenergie in Abhängigkeit von der Fertigungsgeschwindigkeit gesteuert.

Bekannt ist auch bereits eine Schaltungsanordnung (DE-OS 19 00 856), bei welcher die Elektroden einer Schweißeinrichtung aus einer Spannungsquelle über einen Transformator, ein den Schweißstrom einstellendes Stellglied und einen geschwindigkeitsabhängigen Tachogenerator beeinflußt werden. Dabei sind Mittel zur Regelung der Höhe des Schweißstromes in Abhängigkeit von der Speisespannung, dem Elektrodenabstand sowie in Abhängigkeit von der Speisespannung, dem Elektrodenabstand sowie in Abhängigkeit von Temperaturschwankungen vorgesehen. Bei einer solchen Regelschaltung für die Gleichstromschweißung wird der Schweißstrom-Istwert ständig gemessen und mittels einer Störgrößenaufschaltung bei schon geringsten Schwankungen das Stellglied beeinflußt, so daß die Schweißstromstärke den jeweils gegebenen Anforderungen entspricht. Die Regelung kann hierbei kurzfristig vorgenommen werden, so daß sich Schwankungen der Speisespannung, des Elektrodenabstandes oder auch Temperaturveränderungen bezüglich des Schweißstromes nicht bemerkbar machen, sondern die Schweißstromstärke immer den Wert erhält, welcher zur Durchschweißung der Schweißnaht jeweils erforderlich ist.

Schwierigkeiten ergeben sich jedoch dann, wenn erhöhte Fertigungsgeschwindigkeiten verlangt werden und unterschiedliche Metalle bzw. Bandstärken zum Einsatz kommen. Hohe Fertigungsgeschwindigkeiten lassen nämlich den störenden Einfluß der Welligkeit des Schweißstromes ansteigen, so daß nicht mehr gewährleistet ist, daß mit bekannten Regeleinrichtungen einwandfreie Schweißnähte hergestellt werden können.

Um hier Abhilfe zu schaffen, könnte man zwar Siebglieder in den Regelkreis einbauen, einer wesentlichen Vergrößerung solcher Siebketten sind jedoch aufgrund der Zeitkonstanten des Regelkreises Grenzen gesetzt. Auch der Ersatz bekannter Stellglieder, beispielsweise durch Transistoren, bringt nicht immer den gewünschten Effekt bzw. macht zusätzliche Aufwendungen erforderlich, z. B. dadurch, daß die überschüssige Energie über geeignete Kühlmittel, etwa Wasser oder Luft, abgeführt werden muß.

Der Erfindung liegt daher die Aufgabe zugrunde, eine Schweißstromregelung bzw. eine Regelung der Schweißleistung, wenn es um eine Laser-Schweißeinrichtung geht, in Abhängigkeit von der Fertigungsgeschwindigkeit herbeizuführen, die ein problemloses Verschweißen beliebiger Metalle und Metallbänder unterschiedlicher Banddicken bei einer optimalen Schweißstromform gewährleistet.

Gelöst wird diese Aufgabe gemäß der Erfindung dadurch, daß zu einem einstellbaren, von einer Festspannungsquelle abgegebenen Festspannungswert ein geschwindigkeitsabhängiger Spannungswert addiert wird und daß die addierten elektrischen Spannungswerte einem Schweißstromregler bzw. einem Regler des Lasers zugeführt werden. Die Einstellung eines Festspannungswertes, etwa in Abhängigkeit von der gewählten Banddicke, bewirkt eine Nullpunktverschiebung im Strom-Geschwindigkeitsdiagramm, während die Addition des geschwindigkeitsabhängigen Spannungswertes zu der im jeweiligen Nullpunkt beginnenden Schweißstrom- bzw. Schweißbelastungskennlinie führt. Diese Maßnahme ermöglicht die Wahl beliebiger Strom- oder Leistungswerte in Abhängigkeit von der Schweißgeschwindigkeit, die Anpassung an beliebige Schweißbedingungen ist möglich.

Zur Durchführung der Erfindung hat sich für den Fall einer Gleichstrom-Lichtbogenschweißeinrichtung eine Schaltungsanordnung als zweckmäßig erwiesen, bei der die Schweißelektroden aus einer Spannungsquelle über einen Transformator, ein den Schweißstrom einstellendes Stellglied sowie Gleichrichterelemente gespeist werden sowie das Stellglied von einem geschwindigkeitsabhängigen Tachogenerator beeinflußt wird, der einem Regler zugeschaltet ist. Wesentlich hierbei ist, daß in Weiterführung der Erfindung in Reihe mit dem Tachogenerator eine einstellbare Festspannungsquelle geschaltet ist. Der Tachogenerator liefert dabei die geschwindigkeitsabhängige Spannung von z. B. 0-20 V, während die einstellbare Festspannungsquelle, etwa ein beliebiger Stufenschalter, einen Basis-Spannungswert von 0-10 V zur Verfügung stellt.

Die in einer entsprechenden Schaltung addierten Spannungswerte werden dann dem einen Eingang eines Schweißstromreglers zugeführt, während am anderen Eingang vom Stromwandler herkommend der Schweißstrom-Istwert eingegeben wird. Ein Soll-Istwert-Vergleich im Schweißstromregler führt dann am Ausgang zum benötigten Schweißstrom.

Eine andere vorteilhafte Möglichkeit ist in Durchführung der Erfindung die, daß die Schweißelektroden aus einer Spannungsquelle über einen Transformator, ein den Schweißstrom einstellendes Stellglied sowie Gleichrichterelemente gespeist werden, wobei das Stellglied von einem schweißgeschwindigkeitsabhängigen Tachogenerator beeinflußt wird, der einem Regler zugeschaltet ist. Hierbei sind in Durchführung der Erfindung der Tachogenerator und eine Festspannungsquelle mit ihren Ausgängen getrennt mit den Eingängen eines Summierverstärkers verbunden, dessen Ausgang auf einen Eingang des Schweißstromreglers einwirkt, während ein weiterer Eingang dieses Reglers mit dem Gleichstromwandler verbunden ist. Bei dieser Anordnung ist eine unmittelbare gegenseitige Beeinflussung bei der Addition der beiden Spannungswerte ausgeschlossen, es sind klare elektrische Verhältnisse geschaffen. Die Ausgangsspannung des Summierverstärkers wird dann, wie oben bereits erwähnt, auch hier dem einen Eingang eines Schweißstromreglers zugeführt, während der andere Eingang dieses Reglers vom Stromwandler her mit dem Schweißstrom-Istwert gespeist wird.

Eine weitere Verbesserung der Schweißstromregelung ist noch dadurch gesichert, daß zwischen dem Ausgang des Tachogenerators und dem Eingang des Summierverstärkers ein Spannungsteiler vorgesehen ist. Mit dessen Hilfe ist die Neigung der Schweißstromkennlinie einstellbar.

Handelt es sich abweichend von den erwähnten Gleichstrom-Lichtbogenschweißeinrichtungen um Laserschweißeinrichtungen z. B. in Form eines CO₂-Lasers, dann wird man die addierten Spannungswerte einem entsprechenden Regler des Lasers zuführen bzw. den Ausgang des Summierverstärkers auf den Eingang des Laser-Reglers einwirken lassen.

Die Aufgabe der Erfindung, durch Verringerung der Welligkeit des Schweißstromes optimale Bedingungen für das Verschweißen zum Rohr geformter Metallbänder sicherzustellen, führt in Weiterbildung des Erfindungsgedankens bei einer Schweißstromregelung, bei der die Schweißelektroden aus einer Spannungsquelle über einen Transformator, ein den Schweißstrom einstellendes Stellglied sowie Gleichrichterelemente gespeist werden und das Stellglied von einem schweißgeschwindigkeitsabhängigen Tachogenerator beeinflußt wird, der einem Regler zugeschaltet ist, zu der Maßnahme, daß das Stellglied eine Thyristorgleichrichteranordnung ist, die über eine nachgeschaltete, vom Regler angesteuerte Transistoreinheit gesteuert wird. Eine solche Anordnung führt zu einer Reduzierung der Verlustleistung in den Transistoren, so daß eine bisweilen oft recht aufwendige Kühlung dieser Schaltelemente entfällt. Gleichzeitig bedient man sich bei Anwendung der Erfindung aber des Vorteils kurzer Regelzeiten, die sich durch den Einsatz der Transistoren ergeben. Die Thyristorgleichrichteranordnung wird so gesteuert, daß der Spannungsabfall an den Transistoren sowie die dadurch bedingte Verlustleitung auf einem Minimum gehalten wird.

In Durchführung der Erfindung hat es sich als zweckmäßig erwiesen, wenn im Rückführungskreis von der Transistoreinheit zur Thyristorgleichrichteranordnung ein zusätzlicher Regelverstärker vorgesehen ist. Damit ist eine problemlose Steuerung der Thyristorgleichrichter möglich, das gilt auch für hohe Fertigungsgeschwindigkeiten.

Um durch Verringerung der Welligkeit des Schweißstromes optimale Bedingungen für das Verschweißen zum Rohr geformter Metallbänder sicherzustellen, kann man in Weiterbildung des Erfindungsgedankens als Stellglied höherpulsige Gleichrichteranordnungen verwenden, beispielsweise kann man auf eine zwölfpulsige Gleichrichtereinheit zurückgreifen.

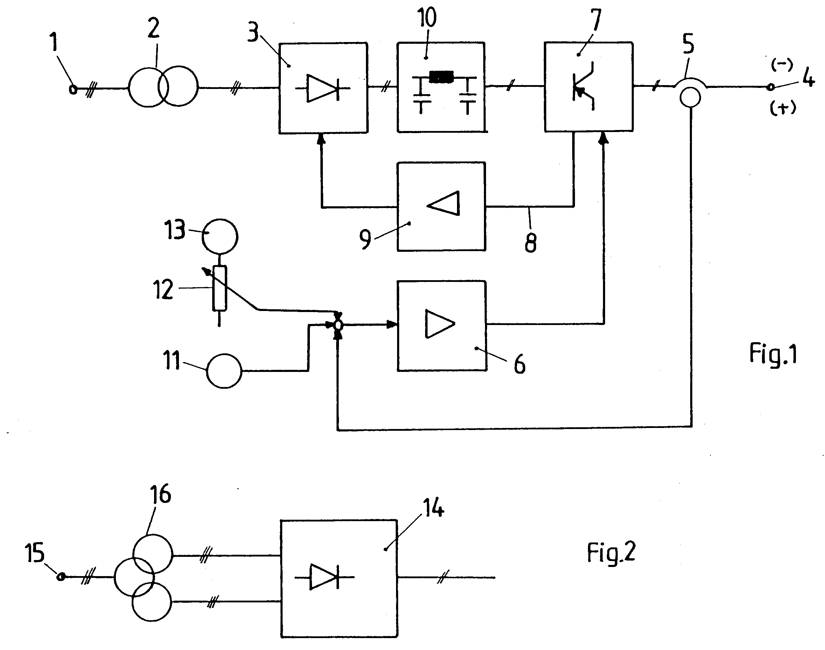

Die Erfindung sei anhand der in den Figuren 1 bis 5 dargestellten Ausführungsbeispiele näher erläutert.

Wie aus der Fig. 1 ersichtlich, ist mit 1 die Speisespannungsquelle bezeichnet, bei welcher es sich beispielsweise um das 50 Hz-Wechselstromnetz handeln kann. An die Spannungsquelle 1 ist der Transformator 2 angeschlossen, der sekundärseitig mit dem Thyristor 3 verbunden ist. Zwischen den mit (+) und (-) bezeichneten Elektroden 4 der nicht dargestellten Schweißeinrichtung und dem Thyristor 3 ist ein Gleichstromwandler 5 angeschlossen, an welchem sekundärseitig eine dem Istwert des Schweißstromes entsprechende Spannung abgegriffen werden kann. Der Regler 6 erhält seine Energieversorgung über ein nicht dargestelltes Netzteil.

Die Thyristorgleichrichteranordnung 3 wird bekanntlich bei jedem Nulldurchgang der Spannung wieder stromundurchlässig und muß dann jeweils wieder gezündet werden. Diese Zündung erfolgt durch den Regler 6, der den Zeitpunkt der Zündung des Thyristors 3 je nach den Gegebenheiten früher oder später legt, so daß entsprechend mehr oder weniger Strom an die Schweißelektroden 4 gelangt. Diese Steuerung der Thyristoreinheit 3 durch den Regler 6 erfolgt nun aber nicht unmittelbar, sondern, wie dargestellt, über die Transistoreinheit 7, die der Thyristorgleichrichteranordnung 3 nachgeschaltet ist, aber eine Rückführung 8 zu dieser besitzt, mit deren Hilfe über einen Regelverstärker 9 die Thyristoranordnung 3 so angesteuert wird, daß der Spannungsabfall an den Transistoren 7 und damit deren Verlustleistung auf ein Minimum gehalten werden kann. Durch den Einsatz der Transistoreinheit 7 dagegen ist die Regelbarkeit weiter verbessert sowie eine wesentliche Verringerung der Welligkeit des Schweißstromes auch bei hohen Abzugsgeschwindigkeiten erreicht. Eine weitere Verbesserung kann noch dadurch erreicht werden, daß, wie aus der Fig 1 ersichtlich, zwischen der Thyristorgleichrichteranordnung 3 und der nachgeschalteten Transistoreinheit 7 ein Siebglied 10 angeordnet ist.

Wie bereits ausgeführt, kann es für die Erfindung bisweilen vorteilhaft sein, wenn der Regler 6 mit einer Spannung beaufschlagt wird, die sich aus einem einstellbaren Festspannungswert und einem geschwindigkeitsabhängigen Spannungswert zusammensetzt. Um dies zu erreichen, ist eine Additionsschaltung aus dem Tachogenerator 11 sowie einer über den Widerstand 12 einstellbaren Spannungsquelle 13 vorgesehen. Der aus den Schaltelementen 11 und 13 resultierende Spannungswert wird an den Regler 6 gegeben, der mit dem Gleichstromwandler 5 verbunden ist und von dort den Gleichstrom-Istwert erhält, der dann mit dem vom Tachogenerator 11 und der einstellbaren Spannungsquelle 13 gelieferten Spannungswert verglichen und zur Regelung herangezogen wird.

Abweichend von dem in der Fig. 1 dargestellten Ausführungsbeispiel ist in der Fig. 2 eine Anordnung dargestellt, bei der die z. B. sechspulsige Thyristorgleichrichteranordnung 3 durch eine zwölfpulsige Anordnung 14 ersetzt ist. Dementsprechend ist auch der von der Speisespannungsquelle 15 gespeiste Transformator 16 mit einer zweiten Sekundärwicklung ausgestattet. Alle anderen Schaltelemente der erfindungsgemäßen Schaltungsanordnung entsprechen denen, wie sie in der Fig. 1 zur Durchführung der Erfindung verwendet worden sind.

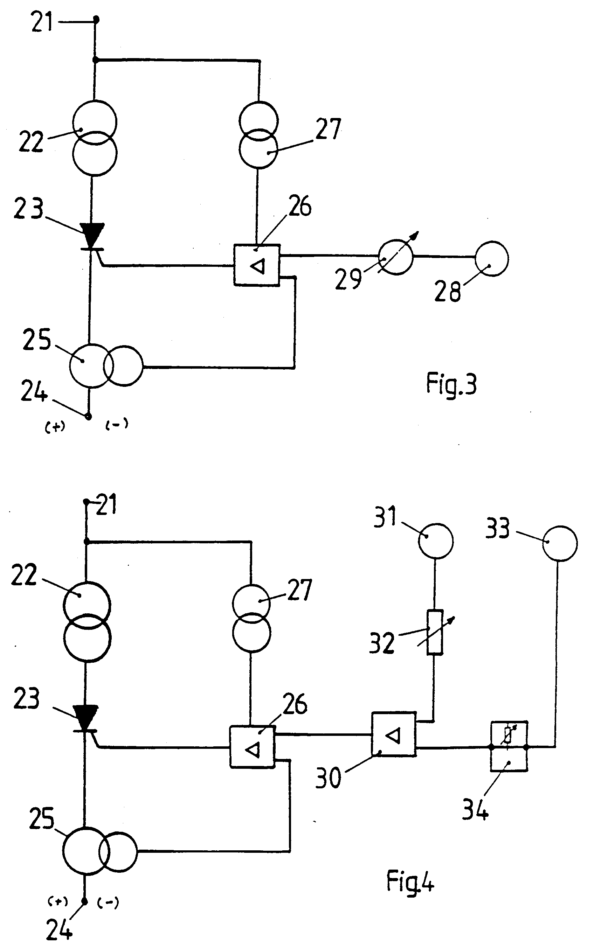

Wie aus der Fig. 3 ersichtlich, ist mit 21 die Speisespannungsquelle bezeichnet, bei welcher es sich beispielsweise um das 50 Hz-Wechselstromnetz handeln angeschlossen, der sekundärseitig mit dem Thyristor 23 verbunden ist. Zwischen den mit (+) und (-) bezeichneten Elektroden 24 der Schweißeinrichtung und dem Thyristor 23 ist ein Gleichstromwandler 25 angeschlossen, an welchem sekundärseitig eine dem Istwert des Schweißstromes entsprechende Spannung abgegriffen werden kann. Der Regler 26 erhält seine Energieversorgung über das Netzteil 27. Der Thyristor 23 wird, wie oben bereits erwähnt, bei jedem Nulldurchgang der Spannung wieder stromundurchlässig und muß dann jeweils wieder gezündet werden. Diese Zündung wird durch den Regler 26 vorgenommen, der nun den Zeitpunkt der Zündung des Thyristors 23 je nach den Gegebenheiten früher oder später legt, so daß entsprechend mehr oder weniger Strom an die Schweißelektroden 24 gelangt.

Wesentlich für die Erfindung ist nun, daß der Regler 26, an dessen Stelle auch der Eingang eines Lasers treten kann, mit einer Spannung beaufschlagt wird, die sich aus einem einstellbaren Festspannungswert und einem geschwindigkeitsabhängigen Spannungswert ergibt. Um das zu erreichen, ist eine Additionsschaltung aus dem Tachogenerator 28 und der einstellbaren Spannungsquelle 29 vorgesehen. Der aus 28 und 29 ermittelte Spannungswert wird an den Regler 26 gegeben, der mit dem Gleichstromwandler 25 verbunden ist und von dort den Schweißstrom-Istwert erhält, der dann mit dem vom Tachogenerator 28 und der einstellbaren Spannungsquelle 29 gelieferten Spannungswert verglichen und zur Regelung herangezogen wird. Der Gleichstromwandler 25 kann auch durch einen Nebenwiderstand (Shunt) mit nachgeschaltetem Trennverstärker gebildet werden.

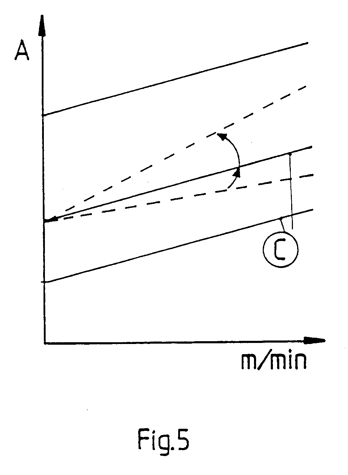

Abweichend hiervon ist in der Fig. 4 eine Anordnung gewählt, bei der zur Addition der beiden Spannungswerte ein Summierverstärker 30 handelsüblicher Bauart verwendet wird. Der Ausgang eines Summierverstärkers ist mit dem wird. Der Ausgang eines Summierverstärkers ist mit dem einen Eingang des Reglers 26 verbunden bzw. mit dem Eingang z. B. eines regelbaren Hochfrequenzgenerators, der die Ausgangsleistung eines Schweißlasers steuert, während der andere Eingang an den Stromwandler 25 angeschlossen ist. Der für die Addition benötigte Festspannungswert wird von der einstellbaren Spannungsquelle 31 dem einen Eingang des Summierverstärkers 30 zugeführt, wobei die Einstellung des jeweiligen Spannungswertes durch den Spannungsteiler 32 vorgenommen wird. Der geschwindigkeitsabhängige Wert wird vom Tachogenerator 33 geliefert, wobei die Steilheit der geschwindigkeitsabhängigen Kennlinie durch den Stufenschalter 34 einstellbar ist.

Die Wirkungsweise der in den Fig. 3 und 4 beschriebenen Schaltungen zeigt die Fig. 5 in einem Diagramm. Über der Schweißgeschwindigkeit in m/min ist der Schweißstrom in A aufgetragen. Der dem Summierverstärker 30 zugeführte fest einstellbare Spannungswert führt zu einem bestimmten Basisstrom, eine Änderung dieses Spannungswertes führt, wie aus der Figur ersichtlich, zu einer Parallelverschiebung des Nullpunktes in Richtung der Stromachse bzw. zu einer entsprechenden Parallelverschiebung der Kurvenschar C. Wesentlich für die Erfindung ist ferner, daß durch den dem Tachogenerator 33 vorgeschalteten Stufenschalter 34 die Neigung der Kurvenschar 30 veränderbar ist, so daß je nach den Erfordernissen in Abhängigkeit von der Schweißgeschwindigkeit mit kleineren oder größeren Schweißstromstärken pro Zeiteinheit gefahren werden kann. Insbesondere die Fig. 4 zeigt die erfindungsgemäßen Vorteile, die in gleicher Weise für Gleichstrom-Lichtbogenschweißeinrichtungen und Laser-Schweißeinrichtungen gelten und sich dadurch ergeben, daß die vom Tachogenerator 33 und der Festspannungsquelle 31 dem Summierverstärker zugeführten Spannungswerte einander nicht beeinflussen und daß ein gemeinsamer Nullpunkt vorhanden ist.

## Patentansprüche

1. Verfahren zur Regelung des Schweißstromes bei einer Gleichstrom-Lichtbogenschweißeinrichtung bzw. der Schweißleistung einer Laserschweißeinrichtung in Abhängigkeit von der Schweißgeschwindigkeit bei Schweißeinrichtungen zur kontinuierlichen Längsnahtverschweißung zum Rohr geformter Metallbänder, dadurch gekennzeichnet, daß zu einem einstellbaren, von einer Festspannungsquelle abgegebenen Festspannungswert ein geschwindigkeitsabhängiger Spannungswert addiert wird und daß die addierten elektrischen Spannungswerte einem Schweißstromregler bzw. einem Regler des Lasers zugeführt werden.

2. Schaltungsanordnung zur Durchführung des Verfahrens für eine Gleichstrom-Lichtbogen (Fall a)- bzw. Laserschweißeinrichtung Fall b nach Anspruch 1, bei der Schweißelektroden (4, 24) aus einer Spannungsquelle (1, 21) über einen Transformator (2, 22), ein den Schweißstrom einstellendes Stellglied (3, 23) sowie Gleichrichterelemente gespeist werden und das Stellglied (3, 23) von einem schweißgeschwindigkeitsabhängigen Tachogenerator (11, 28, 33) beeinflußt wird, der einem Regler (6, 26) zugeschaltet ist (Fall a) bzw. die Ausgangsleistung des Schweißlasers über einen von einem schweißgeschwindigkeitsabhängigen Tachogenerator beeinflußten Regler (6, 26) einstellbar ist (Fall b), dadurch gekennzeichnet, daß in Reihe mit dem Tachogenerator (11, 28) eine einstellbare Festspannungsquelle (13, 29) geschaltet ist oder der Tachogenerator (33) und eine Festspannungsquelle (31) mit ihren Ausgängen getrennt mit den Eingängen eines Summierverstärkers (30) verbunden sind, dessen Ausgang auf den Regler (26) einwirkt, wobei ein Eingang dieses Reglers (26) mit einem den Schweißstrom-Istwert eingebenden Gleichstromwandler (25) verbunden ist (Fall a) bzw. über diesen Regler (26) die Ausgangsleistung des Schweißlasers einstellbar ist (Fall b).

3. Schaltungsanordnung nach Anspruch 2, dadurch gekennzeichnet, daß zwischen dem Ausgang des Tachogenerators (33) und dem Eingang des Summierverstärkers (30) ein Spannungsteiler angeordnet ist.

4. Schaltungsanordnung für eine Gleichstrom-Lichtbogenschweißeinrlchtung nach Anspruch 2, dadurch gekennzeichnet, daß das Stellglied (3) eine Thyristorgleichrichteranordnung ist, die über eine nachgeschaltete, vom Regler (6) angesteuerte Transistoreinheit (7) gesteuert wird.

5. Schaltungsanordnung nach Anspruch 4, dadurch gekennzeichnet, daß im Rückführungskreis von der Transistoreinheit (7) zur Thyristorgleichrichteranordnung (3) ein zusätzlicher Regelverstärker (9) vorgesehen ist.

6. Schaltungsanordnung nach Anspruch 4 oder 5, dadurch gekennzeichnet, daß als Stellglied (3, 23) eine zwölfpulsige Gleichrichteranordnung vorgesehen ist.

7. Schaltungsanordnung nach Anspruch 4 oder 5, dadurch gekennzeichnet, daß zwischen der Thyristorgleichrichteranordnung (3) und der nachgeschalteten Transistoreinheit (7) ein Siebglied (10) angeordnet ist.

## Claims

1. Method for controlling the welding current in a DC arc welding device and for controlling the welding power of a laser welding device as a function of the welding speed in the case of welding devices for continuous longitudinal seam welding of metal strips formed into a tube, characterized in that a voltage value depending on speed is added to an adjustable fixed voltage value applied by a fixed voltage source, and in that the added electrical voltage values are fed to a welding current controller or a controller of the laser.

2. Circuit arrangement for carrying out the method for a DC arc welding device (case a) or a laser welding device (case b) according to Claim 1, in which welding electrodes (4, 24) are fed from a voltage source (1, 21) via a transformer (2, 22), an actuator (3, 23) which adjusts the welding current, and rectifier elements, and the actutator (3, 23) is influenced by a tachometer generator (11, 28, 33) which depends on the welding speed and is connected to a controller (6, 26) (case a) and the output power of the welding laser can be adjusted via a controller (6, 26) which is influenced by a tachometer generator which depends on the welding speed (case b), characterized in that an adjustable fixed voltage source (13, 29) is connected in series with the tachometer generator (11, 28), or the tachometer generator (33) and a fixed voltage source (31) are connected separately by their outputs to the inputs of a summing amplifier (30) whose output acts on the controller (26), one input of this controller (26) being connected to a DC convertor (25) which inputs the welding current actual value (case a) or it being possible to adjust the output power of the welding laser via this controller (26) (case b).

3. Circuit arrangement according to Claim 2, characterized in that a voltage divider is arranged between the output of the tachometer generator (33) and the input of the summing amplifier (30).

4. Circuit arrangement for a DC arc welding device according to Claim 2, characterized in that the actuator (3) is a thyristor rectifier arrangement which is controlled by a downstream transistor unit (7) driven by the controller (6).

5. Circuit arrangement according to Claim 4, characterized in that an additional control amplifier (9) is provided in the feedback loop from the transistor unit (7) to the thyristor rectifier arrangement (3).

6. Circuit arrangement according to Claim 4 or 5, characterized in that a twelve-pulse rectifier arrangement is provided as actuator (3, 23).

7. Circuit arrangement according to Claim 4 or 5, characterized in that a filter (10) is arranged between the thyristor rectifier arrangement (3) and the downstream thyristor unit (7).

## Revendications

1. Procédé de réglage du courant de soudage dans le cas d'un équipement de soudage à l'arc à courant continu ou de la puissance de soudage d'un équipement de soudage au laser en fonction de la vitesse de soudage dans le cas d'équipements de soudage pour le soudage longitudinal en continu en tube de bandes métalliques formées, caractérisé en ce que, à une valeur de tension fixe réglable, délivrée par une source de tension fixe, il est ajouté une valeur de tension dépendant de la vitesse et en ce que les valeurs de tension électriques ajoutées sont conduites à un régulateur de courant de soudage ou un régulateur du laser.

2. Dispositif de circuit pour la mise en oeuvre du procédé pour un équipement de soudage à l'arc à courant continu (cas A) ou un équipement de soudage au laser (cas b) selon la revendication 1, ou les électrodes de soudage (4, 24) sont alimentées à partir d'une source de tension (1, 21) par le biais d'un transformateur (2, 22) d'un organe de commande (3, 23) réglant le courant de soudage ainsi que d'éléments redresseurs et où l'organe de réglage (3, 23) est influencé par une génératrice tachymétrique (11, 28, 33), dépendant de la vitesse, qui est branchée sur un régulateur (6, 26) (cas a) ou bien où la puissance de sortie du laser de soudage peut être réglée par le biais d'un régulateur (6, 26) influencé par une génératrice tachymétrique dépendant de la vitesse (cas b), caractérisé en ce qu'une source de tension fixe (13, 29) réglable est branchée en série avec la génératrice tachymétrique (11, 28), ou bien la génératrice tachymétrique (33) et une source de tension fixe (31) sont, par leur sorties et séparément, raccordées aux entrées d'un amplificateur sommateur (30) dont la sortie agit sur le régulateur (26), une entrée de ce régulateur (26) étant raccordée à un convertisseur continu-continu (25) donnant la valeur effective de courant de soudage (cas a) ou bien la puissance de sortie du laser de soudage étant réglable par le biais de ce régulateur (26) (cas b).

3. Dispositif de circuit selon la revendication 2, caractérisé en ce qu'un diviseur de tension est disposé entre la sortie de la génératrice tachymétrique (33) et l'entrée de l'amplificateur sommateur (30).

4. Dispositif de circuit pour un équipement de soudage à l'arc à courant continu selon la revendication 2, caractérisé en ce que l'organe de réglage (3) est un dispositif redresseur à thyristor qui est commandé par le biais d'une unité de transistor (7) installée en aval et pilotée par le régulateur (6).

5. Dispositif de circuit selon la revendication 4, caractérisé en ce que, dans le circuit de réaction depuis l'unité de transistor (7) vers le dispositif redresseur à thyristor (3), il est prévu un amplificateur de réglage (9) supplémentaire.

6. Dispositif de circuit selon la revendication 4 ou 5, caractérisé en ce que, à titre d'organe de réglage (3, 23), il est prévu un dispositif redresseur à douze impulsions.

7. Dispositif de circuit selon la revendication 4 ou 5, caractérisé en ce qu'une unité filtrante (10) est disposée entre le dispositif redresseur à thyristor (3) et l'unité de transistor (7) installée en aval.
